# EUROPEAN PATENT APPLICATION

(11) **EP 3 351 611 A1**
(43) Date of publication of application: **25.07.2018**
(21) Application number: 16846492.3
(22) Date of filing: 14.09.2016
(51) Int. Cl.: C10M 105/08, C09K 5/04, C10M 105/18, C10M 105/32, C10M 105/34, C10M 105/36, C10M 105/38, C10M 107/20, C10M 107/24, C10M 169/04, F25B 1/00, C10M 145/04, C10M 145/14, C10M 145/26, C10N 20/00, C10N 20/02, C10N 20/04, C10N 30/00, C10N 30/02, C10N 40/30

(54) **REFRIGERATION MACHINE OIL, COMPOSITION FOR REFRIGERATION MACHINES, AND COMPRESSION-TYPE REFRIGERATION MACHINE**

(30) Priority: 16.09.2015 JP 2015183257
(71) Applicant: Idemitsu Kosan Co., Ltd, Tokyo 100-8321 (JP)
(72) Inventor: NAKANO, Taeko, Sodegaura-shi Chiba 299-0293 (JP); OKAMOTO, Makoto, Sodegaura-shi Chiba 299-0293 (JP); KISEN, Tadashi, Sodegaura-shi Chiba 299-0293 (JP)
(74) Representative: Hoffmann Eitle
(86) International application number: PCT/JP2016/077061
(87) International publication number: WO 2017/047621

(57) **Abstract**

The refrigerator oil of the present invention contains an oxygen-containing base oil and a viscosity index improver, and has a viscosity index (VI) of 200 or more and a volume resistivity of 1 × 10⁹ Ω·m or more.

## Description

### Technical Field

The present invention relates to a refrigerator oil, a composition for refrigerators, and a compression-type refrigerator using these.

### Background Art

In general, a refrigerator oil is used in a compression-type refrigerator, such as an air conditioner, a refrigerator, and a car air conditioner, and demanded to have compatibility with a refrigerant, along with a lubrication capability. For satisfying the demanded characteristics, oxygen-containing base oils, such as a polyvinyl ether (PVE), a polyalkylene glycol (PAG), and a polyol ester (POE), have been widely used as a refrigerator oil (see, for example, PTLs 1 and 2).

The refrigerator oil may contain an additive blended with the base oil in some cases for enhancing the various capabilities thereof. For example, PTL 3 describes that a polyether compound, such as PAG, having a higher kinetic viscosity than the base oil is blended with the base oil formed of a mineral oil and/or a synthetic oil for the purpose of enhancing the lubrication capability of the refrigerator oil.

### Citation List

### Patent Literatures

PTL 1: WO 2007/046196
PTL 2: JP 2012-52135 A
PTL 3: JP 10-8082 A

### Summary of Invention

### Technical Problem

From the standpoint of energy saving in recent years, the refrigerator oil is demanded to have a higher viscosity index. Furthermore, in the case where the refrigerator oil is used, for example, in a hermetic refrigerator having a motor built in a compressor, the refrigerator oil is demanded to have a high volume resistivity from the standpoint of the prevention of electric leakage.

PVE and POE as a base oil of the refrigerator oil have a high volume resistivity of approximately 10¹² Ω·m, but generally have a viscosity index of 150 or less, which is insufficient. On the other hand, PAG has a favorable viscosity index of 200 or more, but has a volume resistivity of only approximately 10⁸ Ω·m, which is insufficient. Therefore, it is difficult that the refrigerator oils described in PTLs 1 and 2 have an increased volume resistivity while increasing the viscosity index.

In PTL 3, it is expected that the viscosity index is increased to a certain extent since PAG having a high kinetic viscosity is blended. However, in the refrigerator oil described in PTL 3, PAG is blended only for the purpose of enhancing the lubrication capability of the refrigerator oil, and the amount thereof blended is small. Therefore, it is difficult to enhance sufficiently both the viscosity index and the volume resistivity, even according to the teaching of PTL 3.

The present invention has been made in view of the aforementioned problems, and an object thereof is to provide a refrigerator oil that has both an increased viscosity index and an increased volume resistivity.

### Solution to Problem

As a result of earnest investigations made by the present inventors, it has been found that a refrigerator oil that has both an increased viscosity index and an increased volume resistivity can be provided by blending a viscosity index improver with an oxygen-containing base oil, and the present invention shown below has been completed. Accordingly, the present invention provides the following items (1) to (4).
(1) A refrigerator oil containing an oxygen-containing base oil and a viscosity index improver and having a viscosity index (VI) of 200 or more and a volume resistivity of 1 × 10⁹ Ω·m or more.
(2) A composition for refrigerators, containing the refrigerator oil according to the item (1), and a refrigerant.
(3) A compression-type refrigerator containing the refrigerator oil according to the item (1) or the composition for refrigerators according to the item (2).
(4) A method for producing a refrigerator oil, containing blending at least a viscosity index improver with an oxygen-containing base oil, so as to provide a refrigerator oil having a viscosity index (VI) of 200 or more and a volume resistivity of 1 × 10⁹ Ω·m or more.

### Advantageous Effects of Invention

According to the present invention, a refrigerator oil that has both an increased viscosity index and an increased volume resistivity can be provided.

### Description of Embodiments

The present invention will be described with reference to embodiments below.

### Refrigerator Oil

A refrigerator oil according to one embodiment of the present invention is a refrigerator oil containing an oxygen-containing base oil and a viscosity index improver and having a viscosity index (VI) of 200 or more and a volume resistivity of 1 × 10⁹ Ω·m or more.

The refrigerator oil has both good energy saving property and good electric insulation property due to both the high viscosity index and the high volume resistivity thereof.

When the viscosity index (VI) of the refrigerator oil is less than 200, on the other hand, the viscosity thereof tends to vary associated with the temperature change. Accordingly, when the viscosity thereof is increased to a certain extent to form an oil film, the viscosity is increased under a low temperature environment to cause a power loss due to the viscosity resistance, which prevents energy saving from being achieved. When the volume resistivity is less than 1 × 10⁹ Ω·m, the electric insulation property is lowered to promote electric leakage in the case where the refrigerator has a motor or the like built therein.

For further improving both the energy saving property and the electric insulation property, it is preferred that the viscosity index (VI) is 240 or more and the volume resistivity is 1 × 10¹⁰ Ω·m or more, and it is more preferred that the viscosity index (VI) is 270 or more and the volume resistivity is 2 × 10¹⁰ Ω·m or more.

The upper limits of the viscosity index (VI) and the volume resistivity are not particularly determined, and it is general that the viscosity index is 450 or less, and the volume resistivity is 1 × 10¹⁴ Ω·m or less. From the standpoint of the easiness in production of the refrigerator oil, it is preferred that the viscosity index is 430 or less and the volume resistivity is 1 × 10¹³ Ω·m or less, and it is more preferred that the viscosity index is 400 or less and the volume resistivity is 1 × 10¹² Ω·m or less.

The refrigerator oil preferably has a kinetic viscosity at 100°C of 2 mm²/s or more and 100 mm²/s or less. When the kinetic viscosity at 100°C is 2 mm²/s or more, an oil film can be formed under a high temperature environment to prevent lubrication failure from occurring. When the kinetic viscosity at 100°C is 100 mm²/s or less, the viscosity resistance of the refrigerator oil can be prevented from being increased, so as to decrease the power loss. From the standpoint of the lubrication capability, the kinetic viscosity at 100°C is more preferably 2 mm²/s or more and 50 mm²/s or less, further preferably 5 mm²/s or more and 50 mm²/s or less, and still further preferably 5 mm²/s or more and 20 mm²/s or less.

The oxygen-containing base oil and the viscosity index improver contained in the refrigerator oil will be described in more detail below.

### Oxygen-containing Base Oil

The oxygen-containing base oil contains an oxygen atom in the molecular structure thereof. The oxygen-containing base oil has an oxygen atom, and thereby facilitates to ensure compatibility between the refrigerator oil and a refrigerant while achieving the good lubrication capability. The oxygen-containing base oil preferably has an ether group, an ester group, or both of them, from the standpoint of the viscosity-temperature characteristics and the lubrication capability. There are oxygen-containing base oils having an oxygen atom that is introduced to the molecular structure with a hydroxy group, a carboxy group, an aldehyde group, an acetal group, an epoxy group, or the like, but in comparison to these groups, an ether group and an ester group are excellent in thermal stability and facilitate the enhancement of the volume resistivity. The oxygen-containing base oil preferably has a branched structure in any portion of the hydrocarbon moiety thereof for enhancing the volume resistivity.

The oxygen-containing base oil preferably has a kinetic viscosity at 100°C of 1 mm²/s or more and 8 mm²/s or less, more preferably 1.3 mm²/s or more and 6 mm²/s or less, and further preferably 1.6 mm²/s or more and 5 mm²/s or less. When the kinetic viscosity of the oxygen-containing base oil is relatively low as described above, the effect enhancing the viscosity index with the viscosity index improver described later can be easily obtained. Furthermore, the viscosity index improver can prevent the kinetic viscosity of the refrigerator oil from being increased unnecessarily.

Since the volume resistivity is difficult to increase with the viscosity index improver, the volume resistivity of the oxygen-containing base oil is preferably increased for increasing the volume resistivity of the refrigerator oil. Specifically, the volume resistivity of the oxygen-containing base oil is preferably 1 × 10⁹ Ω·m or more.

For ensuring the volume resistivity of the refrigerator oil within the aforementioned range even in the case where PAG or the like having a relatively low volume resistivity is used as the viscosity index improver, the volume resistivity of the oxygen-containing base oil is more preferably 1 × 10¹⁰ Ω·m or more, and more preferably 1 × 10¹¹ Ω·m or more.

### Ester Compound

Examples of the oxygen-containing base oil having an ester group include at least one ester compound selected from an aliphatic monoester, an aliphatic diester, an aliphatic triester, and an aliphatic polyol ester. The polyol ester referred in the description herein means an ester of a tetrahydric or higher polyhydric alcohol.

The aliphatic monoester is an ester of a monohydric alkanol and a saturated aliphatic monocarboxylic acid, and may be specifically represented by the following formula (1).

R¹-CO₂R² (1)

In the formula (1), R¹ and R² each represent a linear or branched alkyl group having 2 to 24 carbon atoms, and R¹ and R² may be the same as or different from each other.

In the formula (1), the number of carbon atoms of R¹ is preferably 3 to 23, and more preferably from 5 to 23. The number of carbon atoms of R² is preferably 3 to 24, and more preferably from 4 to 24. The total number of carbon atoms of the aliphatic monoester is preferably from 20 to 40, more preferably from 22 to 36, and further preferably from 24 to 32. When the total number of carbon atoms is in the range, the various capabilities of the refrigerator oil can be easily improved. Furthermore, the molecular weight thereof can be prevented from becoming too large, so as to facilitate the enhancement of the viscosity index with the viscosity index improver. At least any one of R¹ and R² preferably has a branched structure for enhancing the volume resistivity.

Specific examples of the aliphatic monoester include n-hexanoic acid 2-octyl-1-dodecanoate, n-hexanoic acid 2-decyl-1-tetradecanoate, n-heptanoic acid isostearate, n-heptanoic acid 2-octyl-1-dodecanoate, n-heptanoic acid 2-decyl-1-tetradecanoate, n-octanoic acid isostearate, n-octanoic acid 2-octyl-1-dodecanoate, n-nonanoic acid isostearate, n-nonanoic acid 2-octyl-1-dodecanoate, n-decanoic acid 2-hexyl-1-decanoate, n-decanoic acid isostearate, n-decanoic acid 2-octyl-1-dodecanoate, n-undecanoic acid 2-hexyl-1-decanoate, n-undecanoic acid isostearate, n-undecanoic acid 2-octyl-1-dodecanoate, n-dodecanoic acid 2-hexyl-1-decanoate, 2-decyltetradecanoic acid n-butyrate, 2-decyltetradecanoic acid n-pentanoate, 2-decyltetradecanoic acid n-hexanoate, 2-decyltetradecanoic acid n-heptanoate, 2-decyltetradecanoic acid n-octanoate, 2-octyldodecanoic acid n-hexanoate, 2-octyldodecanoic acid n-heptanoate, 2-octyldodecanoic acid n-octanoate, 2-octyldodecanoic acid n-nonanoate, 2-octyldodecanoic acid n-decanoate, isostearic acid n-octanoate, isostearic acid n-nonanoate, isostearic acid n-decanoate, isostearic acid n-undecanoate, isostearic acid n-dodecanoate, 2-hexyl-1-decanoic acid n-decanoate, 2-hexyl-1-decanoic acid n-undecanoate, and 2-hexyl-1-decanoic acid n-dodecanoate.

Examples of the aliphatic diester include a diol ester, which is an ester of a dihydric alkanol and a saturated aliphatic monocarboxylic acid, and a dibasic acid ester, which is an ester of a monohydric alkanol and a saturated aliphatic dicarboxylic acid.

Examples of the diol ester include a compound represented by the following formula (2-1).

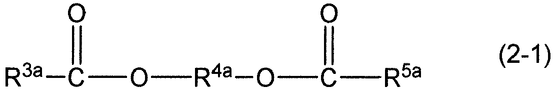

In the formula (2-1), R^{3a} and R^{5a} each represent a linear or branched alkyl group having 2 to 20 carbon atoms, in which R^{3a} and R^{5a} may be the same as or different from each other; and R^{4a} represents a divalent saturated aliphatic hydrocarbon group having 2 to 20 carbon atoms.

In the formula (2-1), it is preferred that the numbers of carbon atoms of R^{3a} and R^{5a} each are from 4 to 14, and the number of carbon atoms of R^{4a} is from 3 to 8, and it is more preferred that the numbers of carbon atoms of R^{3a} and R^{5a} each are from 6 to 9, and the number of carbon atoms of R^{4a} is from 4 to 6. When the numbers of carbon atoms are in the ranges, the various capabilities of the refrigerator oil can be easily improved, the molecular weight can be prevented from becoming too large, and the viscosity index can be easily enhanced with the viscosity index improver. From the standpoint of the enhancement of the volume resistivity, at least one of R^{3a}, R^{4a}, and R^{5a} is preferably branched.

Examples of the dibasic acid ester include a compound represented by the following formula (2-2).

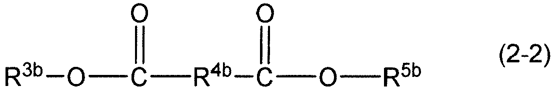

In the formula (2-2), R^{3b} and R^{5b} each represent a linear or branched alkyl group having 2 to 20 carbon atoms, in which R^{3b} and R^{5b} may be the same as or different from each other; and R^{4b} represents a divalent linear or branched saturated aliphatic hydrocarbon group having 2 to 20 carbon atoms.

In the formula (2-2), it is preferred that the numbers of carbon atoms of R^{3b} and R^{5b} each are from 6 to 15, and the number of carbon atoms of R^{4b} is from 3 to 10, and it is more preferred that the numbers of carbon atoms of R^{3b} and R^{5b} each are from 8 to 13, and the number of carbon atoms of R^{4b} is from 4 to 8. When the numbers of carbon atoms are in the ranges, the various capabilities of the refrigerator oil can be easily improved, the molecular weight can be prevented from becoming too large, and the viscosity index can be easily enhanced with the viscosity index improver. From the standpoint of the enhancement of the volume resistivity, at least one of R^{3b}, R^{4b}, and R^{5b} is preferably branched.

Specific examples of the aliphatic diester include an ester of any one of 2,2-dimethyl-1,3-propanediol, 2-methyl-1,3-propanediol, 2-methyl-1,4-butanediol, 1,4-pentanediol, 2-methyl-1,5-pentanediol, and 3-methyl-1,5-pentanediol, and a saturated aliphatic monocarboxylic acid having 7 to 10 carbon atoms, and preferred examples specific thereof include 2,2-dimethyl-1,3-propanediol di(n-heptanoate), 2,2-dimethyl-1,3-propanediol di(n-octanoate), 2,2-dimethyl-1,3-propanediol di(n-nonanoate), 2,2-dimethyl-1,3-propanediol di(n-decanoate), 2-methyl-1,3-propanediol di(n-heptanoate), 2-methyl-1,3-propanediol di(n-octanoate), 2-methyl-1,3-propanediol di(n-nonanoate), 2-methyl-1,3-propanediol di(n-decanoate), 2-methyl-1,4-butanediol di(n-heptanoate), 2-methyl-1,4-butanediol di(n-octanoate), 2-methyl-1,4-butanediol di(n-nonanoate), 2-methyl-1,4-butanediol di(n-decanoate), 1,4-pentanediol di(n-heptanoate), 1,4-pentanediol di(n-octanoate), 1,4-pentanediol di(n-nonanoate), 1,4-pentanediol di(n-decanoate), 2-methyl-1,5-pentanediol di(n-heptanoate), 2-methyl-1,5-pentanediol di(n-octanoate), 2-methyl-1,5-pentanediol di(n-nonanoate), 2-methyl-1,5-pentanediol di(n-decanoate), 3-methyl-1,5-pentanediol di(n-heptanoate), 3-methyl-1,5-pentanediol di(n-octanoate), 3-methyl-1,5-pentanediol di(n-nonanoate), and 3-methyl-1,5-pentanediol di(n-decanoate).

Examples thereof also include an ester of any one of adipic acid, azelaic acid, and sebacic acid, and a monohydric alkanol having 8 to 13 carbon atoms, and preferred specific examples thereof include di(n-octyl)adipate, di(n-nonyl)adipate, di(n-decyl)adipate, di(2-ethylhexyl)adipate, diisooctyl adipate, diisononyl adipate, di(3,5,5-trimethylhexyl)adipate, diisodecyl adipate, diisoundecyl adipate, diisododecyl adipate, diisotridecyl adipate, di(n-octyl)azelate, di(n-nonyl)azelate, di(n-decyl)azelate, di(2-ethylhexyl)azelate, diisooctyl azelate, diisononyl azelate, di(3,5,5-trimethylhexyl)azelate, diisodecyl azelate, diisoundecyl azelate, diisododecyl azelate, diisotridecyl azelate, di(n-octyl)sebacate, di(n-nonyl) sebacate, di(n-decyl)sebacate, di(2-ethylhexyl)sebacate, diisooctyl sebacate, diisononyl sebacate, di(3,5,5-trimethylhexyl)sebacate, diisodecyl sebacate, diisoundecyl sebacate, diisododecyl sebacate, and diisotridecyl sebacate.

Examples of the aliphatic triester include a triol ester, which is an ester of a trihydric polylol and a saturated aliphatic monocarboxylic acid. Examples of the triol ester include a compound represented by the following formula (3).

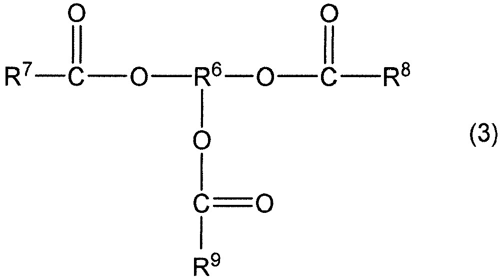

In the formula (3), R⁶ represents a linear or branched trivalent saturated aliphatic hydrocarbon group having 2 to 20 carbon atoms; and R⁷, R⁸, and R⁹ each represent a linear or branched alkyl group having 2 to 20 carbon atoms, in which R⁷, R⁸, and R⁹ may be the same as or different from each other.

In the formula (3), it is preferred that the number of carbon atoms of R⁶ is from 4 to 8, and the numbers of carbon atoms of R⁷, R⁸, and R⁹ each are from 2 to 12, and it is more preferred that the number of carbon atoms of R⁶ is from 5 to 7, and the numbers of carbon atoms of R⁷, R⁸, and R⁹ each are from 3 to 8. When the numbers of carbon atoms are in the ranges, the various capabilities of the refrigerator oil can be easily improved, the molecular weight can be prevented from becoming too large, and the viscosity index can be easily enhanced with the viscosity index improver.

For improving the volume resistivity, it is preferred that at least R⁶ is branched, and it is more preferred that R⁶ is a group obtained by removing hydroxy groups from a hindered alcohol, and further preferably a group obtained by removing hydroxy groups from trimethylolpropane. The hindered alcohol herein means an alcohol that has a quaternary carbon atoms bonded to four carbon atoms.

Preferred examples of the aliphatic triester include an ester of trimethylolpropane and a saturated aliphatic monocarboxylic acid having 4 to 9 carbon atoms, and specific examples thereof include trimethylolpropane tri(n-butanoate), trimethylolpropane triisobutanoate, trimethylolpropane tri(n-pentanoate), trimethylolpropane triisopentanoate, trimethylolpropane tri(n-hexanoate), trimethylolpropane tri(2-ethylhexanoate), trimethylolpropane tri(n-heptanoate), trimethylolpropane triisoheptanoate, trimethylolpropane tri(n-octanoate), trimethylolpropane tri(2,2-dimethylhexanoate), trimethylolpropane tri(n-nonanoate), and trimethylolpropane tri(3,5,5-trimethylhexanoate).

Examples of the polyol ester include an ester of a tetrahydric or higher polyhydric alcohol and a saturated aliphatic monocarboxylic acid, and an ester of a tetrahydric to hexahydric alcohol and a saturated aliphatic monocarboxylic acid is preferred.

Specific examples thereof include a compound represented by the following formula (4) or (5).

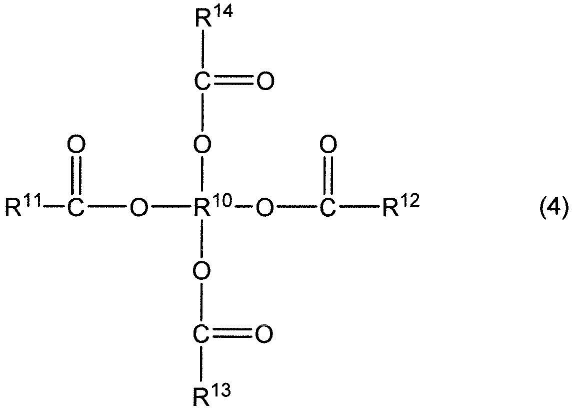

In the formula (4), R¹⁰ represents a linear or branched tetravalent saturated aliphatic hydrocarbon group having 2 to 20 carbon atoms; and R¹¹ to R¹⁴ each represent a linear or branched alkyl group having 2 to 20 carbon atoms, in which R¹¹, R¹², R¹³, and R¹⁴ may be the same as or different from each other.

In the formula (4), it is preferred that the number of carbon atoms of R¹⁰ is from 4 to 8, and the numbers of carbon atoms of R¹¹ to R¹⁴ each are from 2 to 10, and it is more preferred that the number of carbon atoms of R¹⁰ is from 4 to 6, and the numbers of carbon atoms of R¹¹ to R¹⁴ each are from 3 to 8. When the numbers of carbon atoms are in the ranges, the various capabilities of the refrigerator oil can be easily improved, the molecular weight can be prevented from becoming too large, and the viscosity index can be easily enhanced with the viscosity index improver.

For improving the volume resistivity, it is preferred that at least R¹⁰ is branched, and it is more preferred that R¹⁰ is a group obtained by removing hydroxy groups from a hindered alcohol, and further preferably a group obtained by removing hydroxy groups from pentaerythritol.

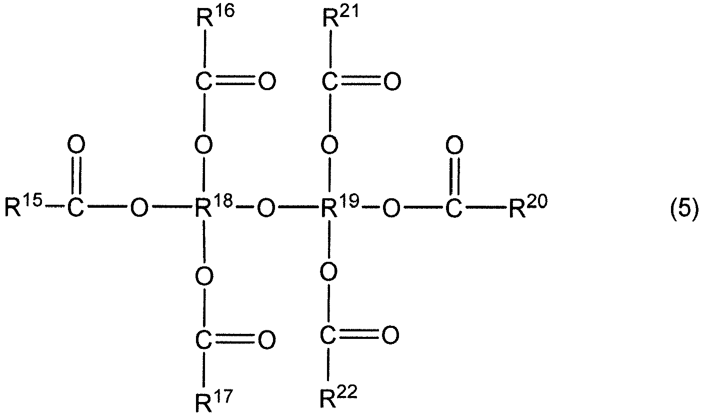

In the formula (5), R¹⁸ and R¹⁹ each represent a linear or branched tetravalent saturated aliphatic hydrocarbon group having 2 to 20 carbon atoms, in which R¹⁸ and R¹⁹ may be the same as or different from each other; and R¹⁵ to R¹⁷ and R²⁰ to R²² each represent a linear or branched alkyl group having 2 to 20 carbon atoms, in which R¹⁵, R¹⁶, R¹⁷, R²⁰, R²¹, and R²² may be the same as or different from each other.

In the formula (5), it is preferred that the numbers of carbon atoms of R¹⁸ and R¹⁹ each are from 4 to 8, and the numbers of carbon atoms of R¹⁵ to R¹⁷ and R²⁰ to R²² each are from 2 to 10, and it is more preferred that the numbers of carbon atoms of R¹⁸ and R¹⁹ each are from 4 to 6, and the numbers of carbon atoms of R¹⁵ to R¹⁷ and R²⁰ to R²² each are from 3 to 8. When the numbers of carbon atoms are in the ranges, the various capabilities of the refrigerator oil can be easily improved, the molecular weight can be prevented from becoming too large, and the viscosity index can be easily enhanced with the viscosity index improver.

For improving the volume resistivity, it is preferred that both R¹⁸ and R¹⁹ are branched. As a preferred specific example of R¹⁸ and R¹⁹, a group obtained by removing hydroxy groups from a hindered alcohol is preferred, and a group obtained by removing hydroxy groups from pentaerythritol is more preferred.

Examples of the polyol ester include an ester of pentaerythritol or dipentaerythritol and a saturated aliphatic monocarboxylic acid having 4 to 9 carbon atoms, and preferred specific examples thereof include pentaerythritol tetrabutanoate, pentaerythritol tetraisobutanoate, pentaerythritol tetrapentanoate, pentaerythritol tetraisopentanoate, pentaerythritol tetrahexanoate, pentaerythritol tetra(2-ethylbutanoate), pentaerythritol tetraheptanoate, pentaerythritol tetraisoheptanoate, pentaerythritol tetraoctanoate, pentaerythritol tetra(2,2-dimethylhexanoate), dipentaerythritol hexabutanoate, dipentaerythritol hexaisobutanoate, dipentaerythritol hexapentanoate, dipentaerythritol hexaisopentanoate, dipentaerythritol hexahexanoate, dipentaerythritol hexa(2-ethylbutanoate), dipentaerythritol hexaheptanoate, dipentaerythritol hexaisoheptanoate, dipentaerythritol hexaoctanoate, and dipentaerythritol hexa(2,2-dimethylhexanoate).

### Ether Compound

Examples of the oxygen-containing base oil having an ether group include an ether compound selected from an aliphatic monoether, an aliphatic diether, an aliphatic triether, an aliphatic tetraether, and a polyvinyl ether (PVE).

Examples of the aliphatic monoether include an alkyl ether, and specific examples thereof include a compound represented by the following formula (6).

R²³-O-R²⁴ (6)

In the formula (6), R²³ and R²⁴ each represent a linear or branched alkyl group having 2 to 24 carbon atoms, in which R²³ and R²⁴ may be the same as or different from each other.

The numbers of carbon atoms of R²³ and R²⁴ each are preferably from 6 to 24, more preferably from 8 to 12, and further preferably from 8 to 10. In the aliphatic monoether, when the numbers of carbon atoms are in the range, the molecular weight of the ether compound becomes relatively small. Accordingly, the effect enhancing the viscosity index with the viscosity index improver can be easily obtained. Furthermore, the various capabilities of the refrigerator oil can be easily improved. From the standpoint of the enhancement of the volume resistivity, R²³ and R²⁴ each are preferably a branched alkyl group.

Specific examples of the aliphatic monoether include n-hexyl ether, n-heptyl ether, n-octyl ether, bis(2-ethylhexyl)ether, n-nonyl ether, isononyl ether, bis(3,5,5-trimethylhexyl)ether, n-decyl ether, bis(2-butyloctyl)ether, bis(2-hexyldecyl)ether, bis(2-heptylundecyl)ether, bis(2-octyldodecyl)ether, bis(2-nonyltridecyl)ether, and bis(2-decyltetradecyl)ether, and among these, bis(2-ethylhexyl)ether and bis(3,5,5-trimethylhexyl)ether are more preferred.

Examples of the aliphatic diether include a dialkyl ether of a dihydric alcohol, and specific examples thereof include a compound represented by the following formula (7).

R²⁵-O-R²⁶-O-R²⁷ (7)

In the formula (7), R²⁵ and R²⁷ each represent a linear or branched alkyl group having 2 to 20 carbon atoms, in which R²⁵ and R²⁷ may be the same as or different from each other; and R²⁶ represents a divalent linear or branched saturated aliphatic hydrocarbon group having 2 to 20 carbon atoms.

In the formula (7), it is preferred that the numbers of carbon atoms of R²⁵ and R²⁷ each are from 4 to 18, and the number of carbon atoms of R²⁶ is from 2 to 10, and it is more preferred that the numbers of carbon atoms of R²⁵ and R²⁷ each are from 7 to 13, and the number of carbon atoms of R²⁶ is from 4 to 6. When the numbers of carbon atoms are in the ranges, the molecular weight becomes relatively small, and the effect enhancing the viscosity index with the viscosity index improver can be easily obtained. Furthermore, the various capabilities, such as the lubrication capability, of the refrigerator oil can be easily improved. From the standpoint of the enhancement of the volume resistivity, at least one of R²⁵ to R²⁷ is preferably branched.

Examples of the aliphatic diether include a dialkyl ether of a dihydric alcohol selected from 2,2-dimethyl-1,3-propanediol, 2-methyl-1,3-propanediol, 2-methyl-1,4-butanediol, 1,4-pentanediol, 2-methyl-1,5-pentanediol, and 1,6-hexanediol, and preferred specific examples thereof include 2,2-dimethyl-1,3-propanediol di(n-heptyl), 2,2-dimethyl-1,3-propanediol di(n-octyl), 2,2-dimethyl-1,3-propanediol di(n-nonyl), 2,2-dimethyl-1,3-propanediol di(n-decyl), 2-methyl-1,3-propanediol di(n-heptyl), 2-methyl-1,3-propanediol di(n-octyl), 2-methyl-1,3-propanediol di(n-nonyl), 2-methyl-1,3-propanediol di(n-decyl), 2-methyl-1,4-butanediol di(n-heptyl), 2-methyl-1,4-butanediol di(n-octyl), 2-methyl-1,4-butanediol di(n-nonyl), 2-methyl-1,4-butanediol di(n-decyl), 1,4-pentanediol di(n-heptyl), 1,4-pentanediol di(n-octyl), 1,4-pentanediol di(n-nonyl), 1,4-pentanediol di(n-decyl), 2-methyl-1,5-pentanediol di(n-heptyl), 2-methyl-1,5-pentanediol di(n-octyl), 2-methyl-1,5-pentanediol di(n-nonyl), 2-methyl-1,5-pentanediol di(n-decyl), 3-methyl-1,5-pentanediol di(n-heptyl), 3-methyl-1,5-pentanediol di(n-octyl), 3-methyl-1,5-pentanediol di(n-nonyl), 3-methyl-1,5-pentanediol di(n-decyl), 1,6-hexanediol di(n-octyl), 1,6-hexanediol di(n-nonyl), 1,6-hexanediol di(n-decyl), 1,6-hexanediol di(2-ethylhexyl), 1,6-hexanediol diisooctyl, 1,6-hexanediol diisononyl, 1,6-hexanediol di(3,5,5-trimethylhexyl), 1,6-hexanediol diisodecyl, 1,6-hexanediol diisoundecyl, 1,6-hexanediol diisododecyl, and 1,6-hexanediol diisotridecyl.

Examples of the aliphatic triether include a trialkyl ether of a trihydric alcohol, and specific examples thereof include a compound represented by the following formula (8).

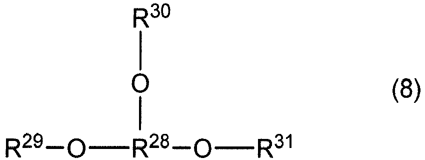

In the formula (8), R²⁸ represents a linear or branched trivalent saturated aliphatic hydrocarbon group having 2 to 20 carbon atoms; and R²⁹ to R³¹ each represent a linear or branched alkyl group having 2 to 20 carbon atoms, in which R29, R³⁰, and R³¹ may be the same as or different from each other.

In the formula (8), it is preferred that the number of carbon atoms of R²⁸ is from 4 to 8, and the numbers of carbon atoms of R²⁹ to R³¹ each are from 3 to 10, it is more preferred that the number of carbon atoms of R²⁸ is from 5 to 7, and the numbers of carbon atoms of R²⁹ to R³¹ each are from 4 to 9, and it is further preferred that the numbers of carbon atoms of R²⁹ to R³¹ each are from 4 to 6. When the numbers of carbon atoms are in the ranges, the molecular weight can be relatively small, and the effect enhancing the viscosity index with the viscosity index improver can be easily obtained. Furthermore, the various capabilities, such as the lubrication capability, can be easily improved.

For making the volume resistivity relatively large, it is preferred that at least R²⁸ is branched, and it is more preferred that R²⁸ is a group obtained by removing hydroxy groups from a hindered alcohol, and further preferably a group obtained by removing hydroxy groups from trimethylolpropane.

Examples of the aliphatic triether include a trialkyl ether of trimethylolpropane, and preferred specific examples thereof include trimethylolpropane tri(n-butyl), trimethylolpropane triisobutyl, trimethylolpropane tri(n-pentane), trimethylolpropane triisopentane, trimethylolpropane tri(n-hexane), trimethylolpropane tri(n-heptane), trimethylolpropane tri(isoheptane), trimethylolpropane tri(n-octane), trimethylolpropane tri(2-ethylhexane), trimethylolpropane tri(2,2-dimethylhexane), trimethylolpropane tri(n-nonane), and trimethylolpropane tri(3,5,5-trimethylhexane). Among these, trimethylolpropane tri(n-butyl) is more preferred.

Examples of the aliphatic tetraether include a tetraalkyl ether of a tetrahydric alcohol, and specific examples thereof include a compound represented by the following formula (9).

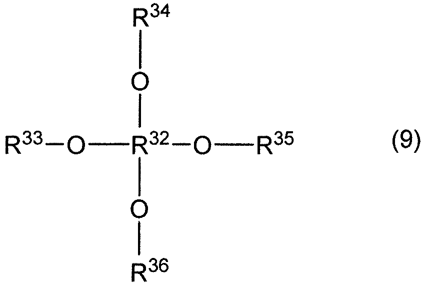

In the formula (9), R³² represents a linear or branched tetravalent saturated aliphatic hydrocarbon group having 2 to 20 carbon atoms; and R³³ to R³⁶ each represent a linear or branched alkyl group having 2 to 20 carbon atoms, in which R³³, R³⁴, R³⁵, and R³⁶ may be the same as or different from each other.

In the formula (9), it is preferred that the number of carbon atoms of R³² is from 4 to 8, and the numbers of carbon atoms of R³³ to R³⁶ each are from 2 to 10, it is more preferred that the number of carbon atoms of R³² is from 4 to 6, and the numbers of carbon atoms of R³³ to R³⁶ each are from 4 to 9, and it is further preferred that the numbers of carbon atoms of R³³ to R³⁶ each are from 4 to 6. When the numbers of carbon atoms are in the ranges, the molecular weight can be relatively small, and thereby the effect enhancing the viscosity index with the viscosity index improver can be easily obtained. Furthermore, the various capabilities, such as the lubrication capability, can be easily improved.

From the standpoint of the enhancement of the volume resistivity, it is preferred that at least R³² is branched, and it is more preferred that R³² is a group obtained by removing hydroxy groups from a hindered alcohol, and further preferably a group obtained by removing hydroxy groups from pentaerythritol.

Examples of the preferred aliphatic tetraether include a tetraalkyl ether of pentaerythritol, and specific examples thereof include pentaerythritol tetra(n-butane), pentaerythritol tetraisobutane, pentaerythritol tetra(n-pentane), pentaerythritol tetraisopentane, pentaerythritol tetra(n-hexane), pentaerythritol tetra(n-heptane), pentaerythritol tetraisoheptane, pentaerythritol tetra(n-octane), pentaerythritol tetra(2-ethylhexane), pentaerythritol tetra(2,2-dimethylhexane), pentaerythritol tetra(n-nonane), and pentaerythritol tetra(3,5,5-trimethylhexane). Among these, pentaerythritol tetra(n-butane) is more preferred.

The total number of carbon atoms of each of the aliphatic monoether, the aliphatic diether, the aliphatic triether, and the aliphatic tetraether is preferably from 12 to 48. When the total number of carbon atoms is in the range, the various capabilities of the refrigerator oil can be easily exhibited. When the total number of carbon atoms is the upper limit or less, the molecular weight becomes relatively small, and the viscosity index of the refrigerator oil can be easily enhanced by using the viscosity index improver in combination. From the standpoint, the total number of carbon atoms of each of the ether compounds is more preferably from 14 to 32, further preferably from 16 to 24, and particularly preferably from 18 to 21.

The polyvinyl ether (PVE) contains a constitutional unit derived from a vinyl ether, and preferably contains a constitutional unit derived from a vinyl alkyl ether. The alkyl group in the vinyl alkyl ether may be an alkyl group having 1 to 20 carbon atoms, and the details thereof are the same as R³⁸ described later.

Specific examples of the polyvinyl ether (PVE) include a compound represented by the following formula (10).

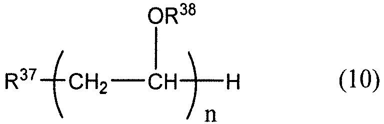

In the formula (10), n represents a repeating unit, an average value of which is from 2 to 20; R³⁷ represents a hydrogen atom or a linear or branched alkyl group having 1 to 20 carbon atoms; and R³⁸ represents a linear or branched alkyl group having 1 to 20 carbon atoms, in which R³⁷ and R³⁸ may be the same as or different from each other.

R³⁷ is preferably a hydrogen atom or an alkyl group having 1 to 10 carbon atoms, and more preferably a hydrogen atom or an alkyl group having 1 to 6 carbon atoms. The number of carbon atoms of R³⁸ is preferably from 1 to 10, and more preferably from 2 to 6, from the standpoint of the lubrication capability and the compatibility with a refrigerant.

When the molecular weight of the polyvinyl ether is smaller, the viscosity thereof becomes lower, and the viscosity index thereof can be easily enhanced with the viscosity index improver described later. Therefore, the average value of n is preferably from 2 to 10, and more preferably from 2 to 5.

Preferred examples of the alkyl group for R³⁷ and R³⁸ include a methyl group, an ethyl group, a n-propyl group, an isopropyl group, a n-butyl group, an isobutyl group, a sec-butyl group, a tert-butyl group, a linear or branched pentyl group, a linear or branched hexyl group, a linear or branched heptyl group, a linear or branched octyl group, a linear or branched nonyl group, and a linear or branched decyl group.

The weight average molecular weight (Mw) of the polyvinyl ether that is used as a base oil is less than 5,000, and is preferably 200 or more and 3,000 or less, and more preferably 250 or more and 2,000 or less.

Among the ester compounds and the ether compounds described above, the ether compounds are preferred from the standpoint of the compatibility with a refrigerant, the hydrolytic stability, and the like. The aliphatic monoether, the aliphatic diether, the aliphatic triether, and the aliphatic tetraether are preferred, and the aliphatic monoether is more preferred among these, from the standpoint that the viscosity index can be enhanced by using the viscosity index improver in combination, and the volume resistivity can also be easily enhanced.

The oxygen-containing base oil is a major component in the refrigerator oil. Specifically, the oxygen-containing base oil is generally 65% by mass or more and 97% by mass or less, preferably 70% by mass or more and 92% by mass or less, and more preferably 75% by mass or more and 89% by mass or less, based on the total amount of the refrigerator oil.

The refrigerator oil may contain a lubricant base oil selected from a mineral oil and a synthetic oil other than the aforementioned oxygen-containing synthetic base oil in such a range that does not impair the effects of the present invention. The total of the mineral oil and the synthetic oil other than the aforementioned oxygen-containing synthetic base oil may be generally 10% by mass or less, preferably 5% by mass or less, and more preferably 3% by mass or less, based on the total amount of the refrigerator oil.

Examples of the mineral oil include a paraffin mineral oil, a naphthene mineral oil, and an intermediate base mineral oil, and examples of the synthetic oil include a poly-α-olefin, an α-olefin copolymer, a polybutene, an alkylbenzene, and a GTL by-product wax isomerized oil.

### Viscosity Index Improver

The viscosity index improver is an additive that enhances the viscosity index of the oxygen-containing base oil. The viscosity index improver may be at least one polymer selected from a polyalkylene glycol (PAG), a polyvinyl ether (PVE), and a polymethacrylate (PMA). The refrigerator oil contains the viscosity index improver blended with the oxygen-containing base oil, and thereby can easily retain a high value for the volume resistivity thereof while enhancing the viscosity index.

The polymer used as the viscosity index improver may have a weight average molecular weight of 5,000 or more and 10,000,000 or less. When the weight average molecular weight of the viscosity index improver is 5,000 or more, the effect enhancing the viscosity index can be obtained with an appropriate amount thereof added, and the decrease of the volume resistivity due to the addition of the viscosity index improver can be suppressed. When the weight average molecular weight thereof is 10,000,000 or less, the viscosity index improver can be easily dissolved in the oxygen-containing base oil.

In consideration of the relationship between the addition amount and the effect enhancing the viscosity index, the weight average molecular weight is preferably 5,000 or more and 5,000,000 or less, more preferably 7,000 or more and 1,000,000 or less, and further preferably 10,000 or more and 600,000 or less.

### Polyalkylene Glycol (PAG)

Examples of the polyalkylene glycol used as the viscosity index improver include a polymer obtained through polymerization or copolymerization of an alkylene oxide. Specific examples of the polyalkylene glycol (PAG) include a compound represented by the following formula (11).

R⁴¹[-(OR⁴²)ᵥ-OR⁴³]_{w} (11)

In the formula, R⁴¹ represents a hydrogen atom, a monovalent hydrocarbon group having 1 to 10 carbon atoms, an acyl group having 2 to 10 carbon atoms, a hydrocarbon group having 1 to 10 carbon atoms and 2 to 6 bonding sites, or an oxygen-containing hydrocarbon group having 1 to 10 carbon atoms and 2 to 6 bonding sites; R⁴² represents an alkylene group having 2 to 4 carbon atoms; R⁴³ represents a hydrogen atom, a hydrocarbon group having 1 to 10 carbon atoms, an acyl group having 2 to 10 carbon atoms, or an oxygen-containing hydrocarbon group having 1 to 10 carbon atoms; w represents an integer of 1 to 6; and v represents a number of 1 or more that provides a weight average molecular weight within the aforementioned range.

In the general formula (11), the monovalent hydrocarbon group having 1 to 10 carbon atoms for each of R⁴¹ and R⁴³ may be any of linear, branched, and cyclic groups. The hydrocarbon group is preferably an alkyl group, and specific examples thereof may include a methyl group, an ethyl group, a n-propyl group, an isopropyl group, a linear or branched butyl group, a linear or branched pentyl group, a linear or branched hexyl group, a linear or branched heptyl group, a linear or branched octyl group, a linear or branched nonyl group, a linear or branched decyl group, a cyclopentyl group, and a cyclohexyl group. When the number of carbon atoms of the monovalent hydrocarbon group is 10 or less, the compatibility with a refrigerant may be improved. From the standpoint, the number of carbon atoms of the monovalent hydrocarbon group is more preferably from 1 to 4.

The hydrocarbon group moiety of the acyl group having 2 to 10 carbon atoms for each of R⁴¹ and R⁴³ may be any of linear, branched, and cyclic groups. The hydrocarbon group moiety of the acyl group is preferably an alkyl group, and specific examples thereof include alkyl groups having 1 to 9 carbon atoms among the aforementioned alkyl groups that may be selected as R⁴¹ and R⁴³. When the number of carbon atoms of the acyl group is 10 or less, the compatibility with a refrigerant may be improved. The number of carbon atoms of the acyl group is preferably from 2 to 4.

In the case where both R⁴¹ and R⁴³ each are a hydrocarbon group or an acyl group, R⁴¹ and R⁴³ may be the same as or different from each other.

In the case where R⁴¹ is the hydrocarbon group having 1 to 10 carbon atoms and 2 to 6 bonding sites, this hydrocarbon group may be either linear or cyclic. The hydrocarbon group having 2 bonding sites is preferably an aliphatic hydrocarbon group, and examples thereof include an ethylene group, a propylene group, a butylene group, a pentylene group, a hexylene group, a heptylene group, an octylene group, a nonylene group, a decylene group, a cyclopentylene group, and a cyclohexylene group. Examples of the other hydrocarbon groups include residual groups obtained by removing hydroxy groups from a bisphenol compound, such as bisphenol, bisphenol F, and bisphenol A. The hydrocarbon group having from 3 to 6 bonding sites is preferably an aliphatic hydrocarbon group, and examples thereof include residual groups obtained by removing hydroxy groups from a polyhydric alcohol, such as trimethylolpropane, glycerin, pentaerythritol, sorbitol, 1,2,3-trihydroxycyclohexane, and 1,3,5-trihydroxycyclohexane.

When the number of carbon atoms of the aliphatic hydrocarbon group is 10 or less, the compatibility with a refrigerant may be improved. The number of carbon atoms of the aliphatic hydrocarbon group is preferably 2 to 6.

Examples of the oxygen-containing hydrocarbon group having 1 to 10 carbon atoms for each of R⁴¹ and R⁴³ include a linear aliphatic group and an alicyclic group each having an ether bond (such as a tetrahydrofurfuryl group).

R⁴² in the general formula (11) is an alkylene group having 2 to 4 carbon atoms, and examples of the oxyalkylene group as a repeating unit include an oxyethylene group, an oxypropylene group, and an oxybutylene group. The oxyalkylene groups in one molecule may be the same as each other, and two or more kinds of oxyalkylene groups may be contained. It is preferred that at least an oxypropylene unit is contained in one molecule, it is more preferred that 70% by mol or more of an oxypropylene unit is contained in the oxyalkylene unit, and it is more preferred that 90% by mol or more of an oxypropylene unit is contained therein.

In the general formula (11), w is an integer of from 1 to 6 and is determined according to the number of bonding sites of R⁴¹. For example, in the case where R⁴¹ is an alkyl group or an acyl group, w is 1, and in the case where R⁴¹ is an aliphatic hydrocarbon group having 2, 3, 4, 5, or 6 bonding sites, w is 2, 3, 4, 5, or 6, respectively.
w is preferably an integer of from 1 to 3, and more preferably an integer of from 1 to 2.

In the case where w is 2 or more, plural groups represented by R⁴³ in one molecule may be the same as or different from each other.

The polyalkylene glycol (PAG) can be produced by a known method.

The PAG having an extremely high molecular weight can also be produced in such a manner that an oxirane monomer is polymerized with a trialkylaluminum and a non-halogen-containing onium salt to provide a PAG.

### Non-halogen-containing Onium Salt

The non-halogen-containing onium salt is a salt containing no halogen atom in an onium salt. The non-halogen-containing onium salt functions as a polymerization initiator in the polymerization reaction in the production method.

Examples of the non-halogen-containing onium salt include an ammonium salt, and preferred examples thereof include a compound represented by the following formula (X).

R⁵¹(-O⁻)ₓ(NR⁵²₄⁺)ₓ (X)

In the formula (X), R⁵¹ represents a linear or branched saturated hydrocarbon group having 1 to 6 carbon atoms and 1 to 4 bonding sites; R⁵² represents a linear or branched alkyl group having 4 to 8 carbon atoms; and x represents an integer of from 1 to 4.

In the compound represented by the formula (X), it is preferred that x is an integer of from 1 to 2, and R⁵¹ has from 1 to 2 bonding sites, and it is more preferred that x is 1, and R⁵¹ is a linear or branched alkyl group having 1 to 6 carbon atoms.

The number of carbon atoms of R⁵¹ is preferably from 1 to 5, and more preferably from 1 to 4. The number of carbon atoms of R⁵² is preferably from 4 to 6, and more preferably 4.

In the case where the onium salt represented by the formula (X) is used, the resulting PAG has R⁵¹(-O-)ₓ as the polymerization initiation end.

Specific examples of R⁵¹ include a linear or branched alkyl group, such as a methyl group, an ethyl group, a n-propyl group, an isopropyl group, a n-butyl group, an isobutyl group, and a tert-butyl group; and a linear or branched saturated hydrocarbon group having from 2 to 4 bonding sites, examples of which include an ethylene group, a propylene group, and a residual group obtained by removing hydroxy groups from a polyhydric alcohol, such as neopentyl glycol, trimethylolpropane, and pentaerythritol.

Specific examples of R⁵² include a linear or branched butyl group and a linear or branched octyl group.

The amount of the non-halogen-containing onium salt used may be changed depending on the target molecular weight, and is preferably 0.005% by mol or more and 1.5% by mol or less, more preferably 0.01% by mol or more and 0.1% by mol or less, further preferably 0.01% by mol or more and 0.06% by mol or less, and particularly preferably 0.01% by mol or more and 0.03% by mol or less, based on the total monomer in the reaction system. When the amount of the non-halogen-containing onium salt used is the lower limit or more, the polymerization reaction can be appropriately performed with the non-halogen-containing onium salt as an initiator. When the amount thereof used is the upper limit or less, the resulting PAG has a sufficiently high molecular weight.

The non-halogen-containing onium salt is synthesized, for example, by reacting an alkali metal alkoxide and a quaternary ammonium salt.

The alkali metal alkoxide can be obtained by alkoxylating an alcohol with a hydride of an alkali metal. The alkyl group of the alcohol used may vary depending on the number of carbon atoms of R⁵¹, and an alcohol having 1 to 6 carbon atoms may be used. The alkyl group may have a liner structure or a branched structure.

The alcohol used may be a monohydric to tetrahydric alcohol, and specific examples thereof include methanol, ethanol, propanol, 2-propanol, butanol, isobutyl alcohol, tert-butyl alcohol, ethylene glycol, propylene glycol, neopentyl glycol, trimethylolpropane, and pentaerythritol.

Examples of the quaternary ammonium salt include tetrabutylammonium chloride, tetrabutylammonium bromide, tetraoctylammonium chloride, and tetraoctylammonium bromide.

### Trialkylaluminum

Specific examples of the trialkylaluminum include a trialkylaluminum having an alkyl group having 1 to 18 carbon atoms, and among them, a trialkylaluminum having an alkyl group having 1 to 8 carbon atoms is preferred, and a trialkylaluminum having an alkyl group having 2 to 6 carbon atoms is more preferred.

The alkyl group contained in the trialkylaluminum may be branched or linear. The alkyl groups contained in one molecule may be the same as or different from each other.

Specific examples of the trialkylaluminum include trimethylaluminum, triethylaluminum, tri-n-butylaluminum, and triisobutylaluminum, and among these, triisobutylaluminum is preferred.

The trialkylaluminum may be used alone, or two or more kinds thereof may be used in combination.

The trialkylaluminum used may be diluted with a solvent, such as hexane and toluene.

In the production of the PAG, the trialkylaluminum is preferably 1 or more and 100 or less, more preferably 5 or more and 50 or less, and further preferably 11 or more and 40 or less, in terms of molar ratio with respect to the non-halogen-containing onium salt.

In the production method, when the trialkylaluminum is in the range, the PAG having a high molecular weight can be produced.

### Oxirane Monomer

The oxirane monomer is a compound having a three-membered heterocyclic ring formed of two carbon atoms and one oxygen atom, and specific examples thereof include ethylene oxide, propylene oxide, and butylene oxide. The oxirane monomer may be used alone, or two or more kinds thereof may be used in combination.

The PAG may be synthesized through ring-opening polymerization of the oxirane monomer in the presence of the trialkylaluminum and the non-halogen-containing onium salt. The polymerization reaction is generally performed by mixing these raw materials in a reaction system. The raw materials may be mixed, for example, in such a manner that the oxirane monomer is added to the non-halogen-containing onium salt having been charged in the reaction system, and then the trialkylaluminum is further added thereto. In alternative, the raw materials may be mixed in such a manner that the oxirane monomer is added to a mixture of the trialkylaluminum and the non-halogen-containing onium salt having been charged in the reaction system.

The polymerization reaction is preferably performed in the presence of a solvent while it is not particularly limited. By performing the polymerization reaction in the presence of a solvent, the polymerization can be easily controlled to facilitate the production of the PAG having a high molecular weight.

The solvent is not particularly limited as far as the solvent is inert to the raw materials, and examples thereof include a hydrocarbon solvent, such as hexane, cyclohexane, octane, isooctane, and toluene, and an ether solvent, such as a monoether, a diether, a triether, a tetraether, polyvinyl ether, and a polyalkylene glycol compound.

Examples of the monoether include a dialkyl ether having an alkyl group having 1 to 12 carbon atoms. The diether used may be a dialkyl diether having an alkyl group having 1 to 12 carbon atoms, and examples thereof include a dialkyl ether of an alkanediol, such as ethylene glycol, propylene glycol, 1,3-propanediol, 1,4-butanediol, and neopentyl glycol. Examples of the triether and the tetraether include an alkyl ether of a trihydric or tetrahydric alcohol, such as glycerin, trimethylolethane, trimethylolpropane, and pentaerythritol.

These compounds may be used alone, or two or more kinds thereof may be used in combination.

The solvent is generally added to the reaction system to make a concentration of the total monomer (i.e., a molar amount of the monomer per 1 L of the solvent) of 0.1 mol/L or more and 10 mol/L or less, preferably 1 mol/L or more and 8 mol/L or less, and further preferably 1 mol/L or more and 4 mol/L or less. When the concentration of the monomer is the upper limit or less, the PAG having a high molecular weight can be easily produced. When the concentration of the monomer is the lower limit or more, the size of the reaction vessel can be prevented from becoming unnecessarily large.

The condition for performing the polymerization reaction is not particularly limited, and may be appropriately determined depending on the kinds of the raw materials, the target molecular weight, and the like. The pressure in the polymerization reaction is generally the atmospheric pressure. The temperature in the polymerization is generally from -30 to 30°C, preferably from -20 to 10°C, and more preferably from -15 to 0°C. The polymerization time is generally from 0.5 to 24 hours, preferably from 1 to 15 hours, and more preferably from 2 to 10 hours.

The polymerization reaction may be terminated through deactivation of the catalyst by adding, for example, water, an alcohol, an acidic substance, a mixture thereof, or the like. After completing the polymerization reaction, the polymer may be recovered by removing impurities and volatile components by an ordinary method, such as filtering or distillation under reduced pressure.

The resulting polymer has a hydroxy group as the end thereof, and a functional group may be introduced to the end hydroxy group with a modifier. Specifically, a hydrocarbon group having 1 to 10 carbon atoms, an oxygen-containing hydrocarbon group having 1 to 10 carbon atoms, an acyl group having 2 to 10 carbon atoms, or the like may be introduced to the end of the polymer through esterification, etherification, or the like of the hydroxy group.

### Polyvinyl Ether (PVE)

The polyvinyl ether (PVE) used as the viscosity index improver contains a constitutional unit derived from a vinyl ether, and preferably contains a constitutional unit derived from a vinyl alkyl ether. The alkyl ether in the vinyl alkyl ether may be an alkyl group having 1 to 20 carbon atoms, and the details thereof are the same as R⁴⁶ described later.

Specific examples of the polyvinyl ether (PVE) include a compound represented by the following formula (12).

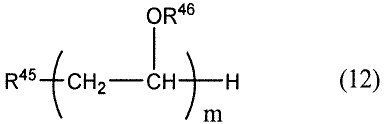

In the formula (12), R⁴⁵ represents a hydrogen atom or a linear or branched alkyl group having 1 to 20 carbon atoms; R⁴⁶ represents a linear or branched alkyl group having 1 to 20 carbon atoms, in which R⁴⁵ and R⁴⁶ may be the same as or different from each other; and m is 1 or more and represents a number corresponding to the weight average molecular weight.

R⁴⁵ is preferably a hydrogen atom or an alkyl group having 1 to 10 carbon atoms, and more preferably a hydrogen atom or an alkyl group having 1 to 6 carbon atoms. The number of carbon atoms of R⁴⁶ is preferably from 1 to 10, and more preferably from 2 to 6, from the standpoint of the lubrication capability and the compatibility with a refrigerant.

Preferred examples of the alkyl group for R⁴⁵ and R⁴⁶ include a methyl group, an ethyl group, a n-propyl group, an isopropyl group, a n-butyl group, an isobutyl group, a sec-butyl group, a tert-butyl group, a linear or branched pentyl group, a linear or branched hexyl group, a linear or branched heptyl group, a linear or branched octyl group, a linear or branched nonyl group, and a linear or branched decyl group.

### Polymethacrylate

The polymethacrylate used as the viscosity index improver is roughly classified into a dispersant type and a non-dispersant type, both of which may be used in the embodiment, and a non-dispersant type is preferred. Examples of the non-dispersant type polymethacrylate include a polymethacrylic acid alkyl ester. Examples of the dispersant type polymethacrylate include a compound obtained by copolymerizing a polymethacrylic acid alkyl ester with a monomer component having a polar group.

Among the viscosity index improvers described above, the polyalkylene glycol and the polyvinyl ether are preferred from the standpoint of the hydrolytic stability. For further enhancing the viscosity index, the polyalkylene glycol is preferred, and for further enhancing the volume resistivity, the polyvinyl ether is preferred.

In the embodiment, the content of the viscosity index improver is preferably 3% by mass or more and 30% by mass or less based on the total amount of the refrigerator oil. When the content of the viscosity index improver is in the range, the viscosity index can be enhanced without deterioration of the volume resistivity. For improving the volume resistivity and the viscosity index in a well balanced manner, the content is more preferably 8% by mass or more and 25% by mass or less, and further preferably 11% by mass or more and 22% by mass or less.

### Other Additives

The refrigerator oil according to the embodiment may further contain one kind or two or more kinds of other additives, such as an antioxidant, an acid scavenger, an oxygen scavenger, an extreme pressure agent, an oiliness agent, a copper deactivator, a rust inhibitor, and an anti-foaming agent. The content of the additives is preferably 20% by mass or less, more preferably 0% by mass or more and 10% by mass or less, based on the total amount of the refrigerator oil. The term 0% by mass means that the refrigerator oil does not contain the other additives.

Examples of the antioxidant include a phenol antioxidant, such as 2,6-di-tert-butyl-4-methylphenol, 2,6-di-tert-butyl-4-ethylphenol, and 2,2'-methylenebis(4-methyl-6-tert-butylphenol); and an amine antioxidant, such as phenyl-α-naphthylamine and N,N'-di-phenyl-p-phenylenediamine, and a phenol antioxidant is preferred. From the standpoints of the effects, the economic efficiency, and the like, the content of the antioxidant is generally from 0.01 to 5% by mass, and preferably from 0.05 to 3% by mass, based on the total amount of the refrigerator oil.

Examples of the acid scavenger include an epoxy compound, such as phenyl glycidyl ether, an alkyl glycidyl ether, an alkylene glycol glycidyl ether, cyclohexene oxide, an α-olefin oxide, and an epoxidized soybean oil. Among these, from the standpoint of the compatibility, phenyl glycidyl ether, an alkyl glycidyl ether, an alkylene glycol glycidyl ether, cyclohexene oxide, and an α-olefin oxide are preferred.

The alkyl group in the alkyl glycidyl ether, and the alkylene group in the alkylene glycol glycidyl ether each may be branched, and the number of carbon atoms thereof is generally from 3 to 30, preferably from 4 to 24, and particularly preferably from 6 to 16. The α-olefin oxide used generally has a total number of carbon atoms of from 4 to 50, preferably from 4 to 24, and particularly from 6 to 16. In the embodiment, the acid scavenger may be used alone, or two or more kinds thereof may be used in combination. The content thereof is generally from 0.005 to 5% by mass, and preferably from 0.05 to 3% by mass, based on the total amount of the refrigerator oil, from the standpoint of the effects and the inhibition of sludge formation.

In the embodiment, the stability of the refrigerator oil can be enhanced by containing the acid scavenger.

Examples of the oxygen scavenger include a sulfur-containing aromatic compound, such as 4,4'-thiobis(3-methyl-6-t-butylphenol), diphenyl sulfide, dioctyldiphenyl sulfide, a dialkyldiphenylene sulfide, benzothiophene, dibenzothiophene, phenothiazine, benzothiapyrane, thiapyrane, thianthrene, dibenzothiapyrane, and diphenylene disulfide; an aliphatic unsaturated compound, such as various olefins, dienes, and trienes; and a terpene compound having a double bond. The content of the oxygen scavenger is generally from 0.005 to 5% by mass, and preferably from 0.05 to 3% by mass, based on the total amount of the refrigerator oil.

Examples of the extreme pressure agent include a phosphorus extreme pressure agent, such as a phosphate ester, an acidic phosphate ester, a phosphite ester, an acidic phosphite ester, and amine salts thereof.

Examples of the phosphorus extreme pressure agent include tricresyl phosphate, trithiophenyl phosphate, tri(nonylphenyl)phosphite, dioleyl hydrogenphosphite, and 2-ethylhexyldiphenyl phosphite, from the standpoint of the extreme pressure property, the frictional characteristics, and the like.

Examples of the extreme pressure agent also include a metal salt of a carboxylic acid. The metal salt of a carboxylic acid referred to herein is preferably a metal salt of a carboxylic acid having 3 to 60 carbon atoms, and more preferably a metal salt of a fatty acid having 3 to 30 carbon atoms, and particularly preferably a fatty acid having 12 to 30 carbon atoms. Examples thereof further include a metal salt of a dimer acid or a trimer acid of the aforementioned fatty acid, and a dicarboxylic acid having 3 to 30 carbon atoms. Among those, a metal salt of a fatty acid having 12 to 30 carbon atoms and a metal salt of a dicarboxylic acid having 3 to 30 carbon atoms are particularly preferred.

The metal constituting the metal salt is preferably an alkali metal or an alkaline earth metal, and in particular, an alkali metal is optimum.

Furthermore, examples of the extreme pressure agent other than those described above include a sulfur extreme pressure agent, such as sulfurized fats and oils, a sulfurized fatty acid, a sulfurized ester, a sulfurized olefin, a dihydrocarbyl polysulfide, a thiocarbamate compound, a thioterpene compound, and a dialkyl thiodipropionate compound.

The content of the extreme pressure agent is generally from 0.001 to 5% by mass, and particularly preferably from 0.005 to 3% by mass, based on the total amount of the refrigerator oil, from the standpoint of the lubrication capability and the stability.

The extreme pressure agent may be used alone, or two or more kinds thereof may be used in combination.

Examples of the oiliness agent include an aliphatic saturated or unsaturated monocarboxylic acid, such as stearic acid and oleic acid; a polymerized fatty acid, such as a dimer acid and a hydrogenated dimer acid; a hydroxy fatty acid, such as ricinoleic acid and 12-hydroxystearic acid; an aliphatic saturated or unsaturated monoalcohol, such as lauryl alcohol and oleyl alcohol; an aliphatic saturated or unsaturated monoamine, such as stearylamine and oleylamine; an aliphatic saturated or unsaturated monocarboxylic acid amide, such as lauric acid amide and oleic acid amide; and a partial ester of a polyhydric alcohol, such as glycerin and sorbitol, and an aliphatic saturated or unsaturated monocarboxylic acid.

The oiliness agent may be used alone, or two or more kinds thereof may be used in combination. The content thereof may be selected generally from a range of from 0.01 to 10% by mass, and preferably from 0.1 to 5% by mass, based on the total amount of the refrigerator oil.

Examples of the copper deactivator include an N-[N,N'-dialkyl(alkyl group having 3 to 12 carbon atoms)aminomethyl]triazole.

Examples of the anti-foaming agent include a silicone oil and a fluorinated silicone oil. The content of the anti-foaming agent is generally from 0.005 to 2% by mass, and preferably from 0.01 to 1% by mass, based on the total amount of the refrigerator oil.

Examples of the rust inhibitor include a metal sulfonate, an aliphatic amine compound, an organic phosphite ester, an organic phosphate ester, an organic sulfonic acid metal salt, an organic phosphoric acid metal salt, an alkenyl succinate ester, and a polyhydric alcohol ester. The content of the rust inhibitor is generally from 0.005 to 2% by mass, and preferably from 0.01 to 1% by mass, based on the total amount of the refrigerator oil.

The refrigerator oil according to the embodiment may further contain various other known additives within such a range that does not impair the object of the present invention.

As described above, the refrigerator oil may contain the oxygen-containing base oil and the viscosity index improver, or may contain the oxygen-containing base oil, the viscosity index improver, and at least one selected from the aforementioned additives.

### Production Method of Refrigerator Oil

The refrigerator oil may be produced by blending at least the viscosity index improver with the oxygen-containing base oil. With the oxygen-containing base oil, other additives than the viscosity index improver may also be blended. Furthermore, with the refrigerator oil, a lubricant base oil selected from a mineral oil and a synthetic oil other than the oxygen-containing base oil may be blended. The lubricant base oil may be used, for example, for diluting the viscosity index improver or the other additives.

### Refrigerant

The refrigerator oil is used under an environment of a refrigerant, and specifically is mixed with a refrigerant and used in the interior of the refrigerator. In other words, a composition for refrigerators containing the refrigerator oil and the refrigerant is used in the refrigerator. As for the amounts of the refrigerant and the refrigerator oil in the refrigerator, the mass ratio refrigerant/refrigerator oil is generally from 99/1 to 10/90, and is preferably in a range of from 95/5 to 30/70. When the mass ration is in the range, the refrigerator can have appropriate refrigeration capability and lubrication capability.

Examples of the refrigerant include at least one selected from a fluorinated hydrocarbon compound represented by the following molecular formula (A), a saturated fluorinated hydrocarbon compound (HFC), and a natural refrigerant.

CₚO_{q}FᵣRₛ (A)

In the formula, R represents Cl, Br, I, or H; p represents an integer of from 1 to 6; q represents an integer of from 0 to 2; r represents an integer of from 1 to 14; and s represents an integer of from 0 to 13, provided that in the case where q is 0, p is from 2 to 6, and the fluorinated hydrocarbon compound represented by the molecular formula (A) has one or more carbon-carbon unsaturated bond in the molecule.

The refrigerant represented by the molecular formula (A) will be described in detail below.

The molecular formula (A) shows the kinds and the numbers of the elements in the molecule, and the formula (A) represents a fluorine-containing organic compound with a number p of carbon atoms C being from 1 to 6. In the molecular formula (A), the bonding form of p carbon atoms represented by Cₚ includes a carbon-carbon single bond, an unsaturated bond, such as a carbon-carbon double bond, a carbon-oxygen double bond and the like. The carbon-carbon unsaturated bond is preferably a carbon-carbon double bond from the standpoint of the stability, and the number thereof may be 1 or more, and preferably 1.

In the molecular formula (A), the bonding form of q oxygen atoms represented by O_{q} is preferably oxygen derived from an ether group, a hydroxy group, or a carbonyl group. The number q of oxygen atoms may be 2, and the case having two ether groups, hydroxy groups, or the like is included.

In the case where no oxygen atom is contained in the molecule, i.e., q in O_{q} is 0, p is from 2 to 6, and one or more unsaturated bond, such as a carbon-carbon double bond, is contained in the molecule. Accordingly, the bonding form of p carbon atoms represented by Cₚ necessarily contains at least one carbon-carbon unsaturated bond.

In the molecular formula (A), R represents Cl, Br, I, or H, and may be any one of them, and R is preferably H since the risk of the ozone layer destruction is small.

Preferred examples of the fluorine-containing organic compound represented by the molecular formula (A) include an unsaturated fluorinated hydrocarbon compound, a fluorinated ether compound, a fluorinated alcohol compound, and a fluorinated ketone compound.

### Unsaturated Fluorinated Hydrocarbon Compound

Examples of the unsaturated fluorinated hydrocarbon compound include an unsaturated fluorinated hydrocarbon compound represented by the molecular formula (A), wherein R is H; p is from 2 to 6; q is 0; r is from 1 to 12; and s is from 0 to 11.

Preferred examples of the unsaturated fluorinated hydrocarbon compound include fluorinated compounds of a linear or branched chain olefin having 2 to 6 carbon atoms and a cyclic olefin having 4 to 6 carbon atoms.

Specific examples thereof include ethylene having from 1 to 3 fluorine atoms introduced therein, propene having from 1 to 5 fluorine atoms introduced therein, butene having from 1 to 7 fluorine atoms introduced therein, a pentene compound having from 1 to 9 fluorine atoms introduced therein, a hexene compound having from 1 to 11 fluorine atoms introduced therein, cyclobutene having from 1 to 5 fluorine atoms introduced therein, cyclopentene having from 1 to 7 fluorine atoms introduced therein, and cyclohexene having from 1 to 9 fluorine atoms introduced therein.

Among these unsaturated fluorinated hydrocarbon compounds, an unsaturated fluorinated hydrocarbon compound having 2 to 3 carbon atoms is preferred, examples of which include a fluorinated compound of ethylene, such as trifluoroethylene, and fluorinated compounds of various propane compounds, and a fluorinated compound of propene is more preferred.

Examples of the fluorinated compound of propene include 3,3,3-trifluoropropene, 1,2,3,3,3-pentafluoropropene (HFO1225ye), 1,3,3,3-tetrafluoropropene (HFO1234ze), and 2,3,3,3-tetrafluoropropene (HFO1234yf).

The unsaturated fluorinated hydrocarbon compound may be used alone, and two or more kinds thereof may be used in combination.

### Fluorinated Ether Compound

Examples of the fluorinated ether compound include a fluorinated ether compound represented by the molecular formula (A), wherein R is H; p is from 2 to 6; q is from 1 to 2; r is from 1 to 14; and s is from 0 to 13.

Preferred examples of the fluorinated ether compound include a fluorinated compound of a chain aliphatic ether having 2 to 6 carbon atoms and 1 to 2 ether bonds, in which the alkyl group is linear or branched, and a fluorinated compound of an alicyclic ether having 3 to 6 carbon atoms and 1 to 2 ether bonds.

Specific examples thereof include fluorinated dimethyl ether having from 1 to 6 fluorine atoms introduced therein, fluorinated methyl ether having from 1 to 8 fluorine atoms introduced therein, fluorinated dimethoxyethane having from 1 to 8 fluorine atoms introduced therein, a fluorinated methyl propyl ether compound having from 1 to 10 fluorine atoms introduced therein, a fluorinated methyl butyl ether compound having from 1 to 12 fluorine atoms introduced therein, a fluorinated ethyl propyl ether compound having from 1 to 12 fluorine atoms introduced therein, fluorinated oxetane having from 1 to 6 fluorine atoms introduced therein, fluorinated 1,3-dioxolane having from 1 to 6 fluorine atoms introduced therein, and fluorinated tetrahydrofuran having from 1 to 8 fluorine atoms introduced therein.

### Fluorinated Alcohol Compound

Examples of the fluorinated alcohol compound include a fluorinated alcohol compound represented by the molecular formula (A), wherein R is H; p is from 1 to 6; q is from 1 to 2; r is from 1 to 13; and s is from 1 to 13.

Preferred examples of the fluorinated alcohol compound include a fluorinated compound of a linear or branched aliphatic alcohol having 1 to 6 carbon atoms and 1 to 2 hydroxy groups.

Specific examples thereof include fluorinated methyl alcohol having from 1 to 3 fluorine atoms introduced therein, fluorinated ethyl alcohol having from 1 to 5 fluorine atoms introduced therein, fluorinated propyl alcohol having from 1 to 7 fluorine atoms introduced therein, fluorinated butyl alcohol having from 1 to 9 fluorine atoms introduced therein, fluorinated pentyl alcohol having from 1 to 11 fluorine atoms introduced therein, fluorinated ethylene glycol having from 1 to 4 fluorine atoms introduced therein, and fluorinated propylene glycol having from 1 to 6 fluorine atoms introduced therein.

### Fluorinated Ketone Compound

Examples of the fluorinated ketone compound include a fluorinated ketone compound represented by the molecular formula (A), wherein R is H; p is from 2 to 6; q is from 1 to 2; r is from 1 to 12; and s is from 0 to 11.

Preferred examples of the fluorinated ketone compound include a fluorinated compound of an aliphatic ketone compound having 3 to 6 carbon atoms, in which the alkyl group is linear or branched.

Specific examples thereof include fluorinated acetone having from 1 to 6 fluorine atoms introduced therein, fluorinated methyl ethyl ketone having from 1 to 8 fluorine atoms introduced therein, fluorinated diethyl ketone having from 1 to 10 fluorine atoms introduced therein, and a fluorinated methyl propyl ketone compound having from 1 to 10 fluorine atoms introduced therein.

The fluorinated ketone compound may be used alone, or two or more kinds thereof may be used in combination.

### Saturated Fluorinated Hydrocarbon Compound

The saturated fluorinated hydrocarbon compound is generally a fluorinated compound of an alkane having 1 to 4 carbon atoms, preferably a fluorinated compound of an alkane having 1 to 3 carbon atoms, and more preferably a fluorinated compound of an alkane having 1 to 2 carbon atoms (i.e., methane or ethane). Specific examples of the fluorinated compound of methane or ethane include trifluoromethane (R23), difluoromethane (R32), 1,1-difluoroethane (R152a), 1,1,1-trifluoroethane (R143a), 1,1,2-trifluoroethane (R143), 1,1,1,2-tetrafluoroethane (R134a), 1,1,2,2-tetrafluoroethane (R134), and 1,1,1,2,2-pentafluoroethane (R125).

The saturated fluorinated hydrocarbon compound may be a compound obtained by halogenating the aforementioned fluorinated compound of an alkane with a halogen atom other than fluorine, and examples thereof include trifluoroiodomethane (CF₃I).

The saturated fluorinated hydrocarbon compound may be used alone, or two or more kinds thereof may be used in combination. Examples of the case where two or more kinds thereof are used in combination include a mixed refrigerant containing two or more kinds of a saturated fluorinated hydrocarbon compounds each having 1 to 3 carbon atoms mixed with each other, and a mixed refrigerant containing two or more kinds of a saturated fluorinated hydrocarbon compounds each having 1 to 2 carbon atoms mixed with each other. Specific examples thereof include R410A, which is a mixed refrigerant of difluoromethane (R32) and 1,1,1,2,2-pentafluoroethane (R125), and R407C, which is a mixed refrigerant of difluoromethane (R32), 1,1,1,2,2-pentafluoroethane (R125), and 1,1,1,2-tetrafluoroethane (R134a).

### Natural Refrigerant

Examples of the natural refrigerant include carbon dioxide (carbonic acid gas), ammonia (NH₃), and a hydrocarbon, such as n-propane, n-butane, isobutane, 2-methylbutane, n-pentane, cyclopentane-isobutane, and n-butane. These compounds may be used alone, or two or more kinds thereof may be used in combination, and these compounds may be used along with a refrigerant other than the natural refrigerant.

Among the aforementioned refrigerants, at least one selected from the unsaturated fluorinated hydrocarbon compound, the saturated fluorinated hydrocarbon compound, and the natural refrigerant is preferably used as a refrigerant. Among these, R134a, R410A, R407C, HFO1234yf, HFO1234ze, R32, carbon dioxide, ammonia, n-propane, n-butane, and isobutane are preferred, and among these, R32, R134a, and HFO1234yf are more preferred. A refrigerant containing R32 alone and a refrigerant containing HFO1234yf alone are particularly preferred.

### Compression-type Refrigerator

The refrigerator oil is generally used in a compression-type refrigerator. The compression-type refrigerator contains at least a compressor. The compression-type refrigerator is preferably a hermetic refrigerator having a motor built in a compressor. The refrigerator oil has both a high viscosity index and a high volume resistivity, and thus can achieve energy saving while preventing electric leakage even in the case where the refrigerator oil is used in a hermetic refrigerator.

The compression-type refrigerator contains a refrigerator oil therein, and the refrigerator oil lubricates sliding portions provided by a compressor and the like. The compression-type refrigerator contains a refrigerant in addition to the refrigerator oil (i.e., contains a composition for refrigerators) in the interior thereof, and the composition for refrigerators is circulated in the refrigeration cycle of the refrigerator. The refrigerator has the refrigeration cycle containing, as essential components, a compressor, a condenser, an expansion mechanism (such as, an expansion valve), and an evaporator, or a compressor, a condenser, an expansion mechanism, a dryer, and an evaporator.

The refrigerator oil can be used, for example, for refrigerators of various car air conditioners, e.g., an open type car air-conditioner and an electric car air-conditioner, and of various refrigerator systems, hot water supply systems and heating systems such as a gas heat pump (GHP), an air conditioner, a refrigerator, an automatic vending machine, a showcase, a hot water supply machine, a floor heater, and the like, and among these, is preferably used for a car air-conditioner, and particularly an electric car air-conditioner having a motor built in a compressor. In the car air-conditioner, the refrigerator oil does not necessarily pass through a capillary having a small diameter due to the use of an expansion valve, and thus clogging due to the viscosity index improver, which is a polymer, may not occur.

### Examples

The present invention will be described more specifically with reference to examples below, but the present invention is not limited to the examples.

The measurement methods were as follows.

### (1) Kinetic viscosity (100°C)

The kinetic viscosity was measured with a glass capillary viscometer according to JIS K2283:2000 at the designated temperatures.

### (2) Viscosity index (VI)

The viscosity index was measured according to JIS K2283:2000.

### (3) Weight average molecular weight (Mw)

The weight average molecular weight (Mw) was measured with gel permeation chromatography (GPC). In the GPC, the measurement was performed by using two columns of TSKgel SuperMultipore HZ-M, produced by Tosoh Corporation, tetrahydrofuran as an eluent, and a refractive index detector as a detector, and the weight average molecular weight (Mw) was obtained with the standard polystyrene.

### (4) Volume resistivity

The volume resistivity was measured according to JIS C2101-24 (volume resistivity test) at room temperature of 25°C.

In Examples and Comparative Examples, refrigerator oils having the following compositions were blended, and the refrigerator oils were measured for kinetic viscosity at 100°C, viscosity index, and volume resistivity. The percentage by mass shown below means a ratio based on the total amount of the refrigerator oil.

### Example 1

Oxygen-containing base oil: bis(3,5,5-trimethylhexyl)ether 78% by mass
Viscosity index improver: polyalkylene glycol (PAG) 22% by mass
   *1: The oxygen-containing base oil had a kinetic viscosity at 100°C of 1.45 mm²/s and a volume resistivity of 5.34 × 10¹³ Ω·m.
   *2: The PAG used was Preminol S4318F, produced by Asahi Glass Co., Ltd., which was a compound having a weight average molecular weight (Mw) of 18,000, represented by the formula (11), wherein R⁴¹ is a divalent hydrocarbon group, R⁴² is a propylene group, R⁴³ is a hydrogen atom, v is a number corresponding to the weight average molecular weight, and w is 2.

### Example 2

Oxygen-containing base oil: trimethylolpropane tri(n-butyl) 79% by mass
Viscosity index improver: polyalkylene glycol (PAG) 21% by mass
   *1: The oxygen-containing base oil had a kinetic viscosity at 100°C of 1.31 mm²/s and a volume resistivity of 5.50 × 10¹² Ω·m.
   *2: The PAG used was the same as used in Example 1.

### Example 3

Oxygen-containing base oil: pentaerythritol tetra(n-butyl) 80% by mass
Viscosity index improver: polyalkylene glycol (PAG) 20% by mass
   *1: The oxygen-containing base oil had a kinetic viscosity at 100°C of 1.66 mm²/s and a volume resistivity of 8.04 × 10¹² Ω·m.
   *2: The PAG used was the same as used in Example 1.

### Example 4

Oxygen-containing base oil: polybutyl vinyl ether (PVE) 85% by mass
Viscosity index improver: polyalkylene glycol (PAG) 15% by mass
   *1: The oxygen-containing base oil (PVE) was a compound represented by the formula (10), wherein R³⁸ is a butyl group, R³⁷ is hydrogen, and n is 3.5, having a kinetic viscosity at 100°C of 2.28 mm²/s and a volume resistivity of 4.41 × 10¹¹ Ω·m.
   *2: The PAG used was the same as used in Example 1.

### Example 5

Oxygen-containing base oil: bis(3,5,5-trimethylhexyl)ether 89% by mass
Viscosity index improver: polybutyl vinyl ether (PVE) 11% by mass
   *1: The oxygen-containing base oil was the same as used in Example 1.
   *2: The PVE used as a compound having a weight average molecular weight (Mw) of 84,000, represented by the formula (12), wherein R⁴⁶ is a butyl group, and R⁴⁵ is hydrogen.

### Comparative Example 1

Oxygen-containing base oil: polyoxyethylene polyoxypropylene glycol (PAG) 100% by mass
   *: The PAG had a kinetic viscosity at 100°C of 9 mm²/s and a volume resistivity of 5.3 × 10⁸ Ω·m.

### Comparative Example 2

Oxygen-containing base oil: polyethyl vinyl ether (PVE) 100% by mass
   *: The PVE had a kinetic viscosity at 100°C of 9 mm²/s and a volume resistivity of 1.8 × 10¹² Ω·m.

**Table 1**

| | Example 1 | Example 2 | Example 3 | Example 4 | Example 5 | Comparative Example 1 | Comparative Example 2 |
|---|---|---|---|---|---|---|---|
| Kinetic viscosity at 100°C (mm²/s) | 10 | 10 | 11 | 9 | 13 | 9 | 9 |
| Viscosity index | 344 | 320 | 287 | 264 | 317 | 223 | 90 |
| Volume resistivity (Ω· m) | 5.3 × 10¹⁰ | 5.4 × 10¹⁰ | 1.0 × 10¹¹ | 1.2 × 10¹⁰ | 2.4 × 10¹² | 5.3 × 10⁸ | 1.8 × 10¹² |

As shown above, in Examples 1 to 5, a refrigerator oil that was excellent in both viscosity index and volume resistivity was obtained by blending the prescribed viscosity index improver with the oxygen-containing base oil. On the other hand, in Comparative Examples 1 and 2, it was impossible to increase any one of the viscosity index and the volume resistivity since a viscosity index improver was not blended.

## Claims

1. A refrigerator oil comprising an oxygen-containing base oil and a viscosity index improver and having a viscosity index (VI) of 200 or more and a volume resistivity of 1 × 10⁹ Ω·m or more.

2. The refrigerator oil according to claim 1, wherein the oxygen-containing base oil has at least one of an ester group and an ether group.

3. The refrigerator oil according to claim 1 or 2, wherein the oxygen-containing base oil is at least one selected from the group consisting of an aliphatic monoester, an aliphatic diester, an aliphatic triester, an aliphatic polyol ester, an aliphatic monoether, an aliphatic diether, an aliphatic triether, an aliphatic tetraether, and a polyvinyl ether.

4. The refrigerator oil according to any one of claims 1 to 3, wherein the oxygen-containing base oil is at least one selected from the group consisting of an aliphatic monoether, an aliphatic diether, an aliphatic triether, an aliphatic tetraether, and a polyvinyl ether.

5. The refrigerator oil according to any one of claims 1 to 4, wherein the viscosity index improver is at least one polymer selected from the group consisting of a polyalkylene glycol, a polyvinyl ether, and a polymethacrylate, and has a weight average molecular weight of 5,000 or more and 10,000,000 or less.

6. The refrigerator oil according to any one of claims 1 to 5, wherein the refrigerator oil has a kinetic viscosity at 100°C of 2 mm²/s or more and 100 mm²/s or less.

7. The refrigerator oil according to any one of claims 1 to 6, wherein the oxygen-containing base oil has a kinetic viscosity at 100°C of 1 mm²/s or more and 8 mm²/s or less.

8. A composition for refrigerators, comprising the refrigerator oil according to any one of claims 1 to 7, and a refrigerant.

9. The composition for refrigerators according to claim 8, wherein the refrigerant is at least one selected from the group consisting of a fluorinated hydrocarbon compound represented by the following formula (A), a saturated fluorinated hydrocarbon compound (HFC), and a natural refrigerant:
CₚO_{q}FᵣRₛ (A)
wherein R represents Cl, Br, I, or H; p represents an integer of from 1 to 6; q represents an integer of from 0 to 2; r represents an integer of from 1 to 14; and s represents an integer of from 0 to 13, provided that in the case where q is 0, p is from 2 to 6, and the fluorinated hydrocarbon compound represented by the formula (A) has one or more carbon-carbon unsaturated bond in the molecule.

10. The composition for refrigerators according to claim 8 or 9, wherein the refrigerant is at least one selected from the group consisting of R134a, R410A, R407C, R1234yf, R1234ze, R32, carbon dioxide, ammonia, n-propane, n-butane, and isobutane.

11. A compression-type refrigerator comprising any one of the refrigerator oil according to any one of claims 1 to 7 and the composition for refrigerators according to any one of claims 8 to 10.

12. A method for producing a refrigerator oil, comprising blending at least a viscosity index improver with an oxygen-containing base oil, so as to provide a refrigerator oil having a viscosity index (VI) of 200 or more and a volume resistivity of 1 × 10⁹ Ω·m or more.
